**Europäisches Patentamt**

**European Patent Office**

**Office européen des brevets**

(19)

(11) Veröffentlichungsnummer : **0 466 635 A1**

(12) ## EUROPÄISCHE PATENTANMELDUNG

(21) Anmeldenummer : **91810404.3**

(51) Int. Cl.⁵ : **G01L 19/00**

(22) Anmeldetag : **29.05.91**

(30) Priorität : **13.07.90 CH 2359/90**

(43) Veröffentlichungstag der Anmeldung :
**15.01.92 Patentblatt 92/03**

(84) Benannte Vertragsstaaten :
**AT DE FR GB**

(71) Anmelder : **RECTA AG**
**Viaduktstrasse 3**
**CH-2501 Biel (CH)**

(72) Erfinder : **Gloor, Hans**
**Schollstrasse 39**
**CH-2054 Biel (CH)**

(54) **Messinstrument.**

(57)  Das tragbare Messinstrument (4) umfasst mindestens ein Druckmessgerät und ein Richtungsanzeige-gerät, wobei jedes die gleiche Anzeige (5) benützt. Mit dem Wählschalter (1) das entsprechende Gerät mit der Anzeige (5) verbunden und die Art der Messung wird angezeigt (6). Der Lautsprecher (3) zeigt an, ob ein Grenzwert unter- bzw. überschritten wird.

Fig 1

Die Erfindung betrifft ein Messinstrument nach dem Oberbegriff des Patentanspruchs 1.

Es sind tragbare Instrumente bekannt, die einen Drucksensor aufweisen, um eine Höhendifferenz, einen Barometerstand oder eine Fallgeschwindigkeit anzeigen. Andere Instrumente messen das Erdmagnetfeld zur Orientierung oder zeigen den physiologischen Zustand des Trägers an. Es ist jedoch vielmals wichtig, dass diese Instrumente möglichst wenig Raum beanspruchen und troztdem eine Anzeige aufweisen, die gut leserlich ist auch bei schlechten Umweltbedingungen.

Es ist daher Aufgabe der Erfindung ein Instrument zu schaffen, das klein und leicht ist mit einer grossen Anzeige und zudem mehrere einzelne Geräte ersetzt und einfach zu bedienen ist.

Die Aufgabe wird durch den kennzeichnenden Teil des Patentanspruchs 1 gelöst.

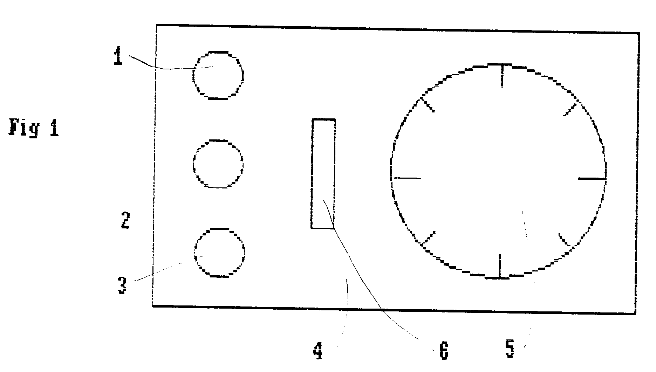

Ein Ausführungsbeispiel der Erfindung ist in der Figur dargestellt.

Sie zeigt ein Instrument 4, das mindestens zwei Geräte umfasst, die alle die gleiche Anzeige 5 beanspruchen.

Diese ist eingeteilt in verschiedene Sektoren und eine elektronische Schaltung sendet die entsprechenden Signale aus, um die einzelnen Sektoren zu aktivieren. Bei der Anzeige kann es sich auch um eine kombinierte Anzeige handeln, wobei ein Sektor eine analoge und ein anderer Sektor eine digitale Anzeige darstellen kann. So wird zum Beispiel die magnetische Richtung durch die analoge und der Druck durch die digitale Anzeige dargestellt. Bei der Anzeige kann es sich zum Beispiel um eine Flüssigkristall-, Elektrolumineszenz- oder Plasmaanzeige handeln. Durch einen Wähler 1 wird die Anzeige von dem gewünschten Apparat gewählt und mit dem Knopf 2 der Messbereich eingestellt. Eine zusätzliche Anzeige 6 teilt dem Benützer mit, welche Daten von welchem Gerät angezeigt werden. Der Lautsprecher 3 gibt ein Signal ab, beim überschreiten bzw. unterschreiten eines Grenzwertes. Der Wähler 1 kann auch ein Mikrofon sein, der auf die Stimme des Trägers reagiert. Dabei kann man die Empfindlichkeit so einstellen, dass nur ein Spektrum einer oder weniger Stimmen den Wähler 1 aktivieren kann.

Als Basisausrüstung ist ein Apparat ein Druckmessgerät und der zweite ein Richtungsanzeigegerät. Die weiteren Geräte können die Temperatur, die Zeit, physiologische Daten des Trägers, die Radioaktivität, die Intensität der ultravioletten, sichtbaren oder der infraroten Strahlung anzeigen, und/oder als Rundfunkempfänger oder Gegensprechanlage betrieben werden. Unter den anzuzeigenden physiologischen Daten kann man sich den Blutdruck, den Puls, die Herzschläge, die Atmung usw. vorstellen als Ueberwachung während einer sportlichen oder beruflichen Tätigkeit.

**Patentansprüche**

1. Messinstrument mit mindestens einem Druckmessgerät und einem Richtungsanzeigegerät, dadurch gekennzeichnet, dass es tragbar augebildet ist und dass die beiden Geräte eine gemeinsame Anzeige ansteuern.

2. Instrument nach Anspruch 1, dadurch gekennzeichnet, dass das Druckmessgerät einen barometrischen Druck, eine Höhe, eine Höhendifferenz, eine Fallgeschwindigkeit usw. misst und anzeigt.

3. Instrument nach Anspruch 1 oder 2, dadurch gekennzeichnet, dass das Richtungsanzeigegerät ein elektronischer Kompass ist, der mit einem magnetfeldsensiblen Detektor ausgerüstet ist.

4. Instrument nach einem der Ansprüche 1 bis 3, dadurch gekennzeichnet, dass neben dem Druckmessgerät und dem Richtungsanzeigegerät ein oder mehrere zusätzliche Geräte ebenfalls die erwähnte Anzeige ansteuern.

5. Instrument nach einem der Ansprüche 1 bis 4, dadurch gekennzeichent, dass die gemeinsame Anzeige gleichzeitig 2 oder mehrere Daten anzeigen kann.

6. Instrument nach einem der Ansprüche 1 bis 4, dadurch gekennzeichnet, dass eine Umschaltvorrichtung vorgesehen ist, um die Anzeige dem ausgewählten Gerät zuzuordnen.

7. Instrument nach Anspruch 6, dadurch gekennzeichnet, dass die Umschaltvorrichtung manuell, optisch, akustisch u.s.w. oder durch die menschliche Sprache bedienbar ist.

8. Instrument nach einem der Ansprüche 1 bis 7, dadurch gekennzeichnet, dass ein Signal aussendbar ist, wenn eine vorbestimmter Wert eines Gerätes unter, bzw. überschritten wird.

9. Instrument nach Anspruch 8, dadurch gekennzeichnet, dass das Signal optisch, akustisch oder mechanisch erfolgt unter eventueller Anzeige von welchem Gerät das Signal herkommt.

10. Instrument nach Anspruch 4, dadurch gekennzeichnet, dass das oder die zusätzlichen Geräte ein Thermometer, ein Zeitintervallgerät, ein Radioaktivitätsmessgerät, ein Strahlungsmessgerät, ein Rundfunkempfänger, ein physiologisches Kontrollgerät oder ein Funksprechgerät ist.

Fig 1

Europäisches
Patentamt

**EUROPÄISCHER RECHERCHENBERICHT**

Nummer der Anmeldung

EP 91 81 0404

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CH-A- 663 092 (RECTA)<br>* Insgesamt *<br>--- | 1,3-4,<br>10 | G 01 L 19/00 |
| A | WO-A-8 505 444 (TSCHANNEN)<br>* Ansprüche 1-5 *<br>----- | 1,3,8-9 | |
| | | | **RECHERCHIERTE SACHGEBIETE (Int. Cl.5)**<br><br>G 01 L<br>G 01 C |

Der vorliegende Recherchenbericht wurde für alle Patentansprüche erstellt

| Recherchenort | Abschlußdatum der Recherche | Prüfer |
|---|---|---|
| DEN HAAG | 08-07-1991 | ZAFIROPOULOS N. |